# EUROPÄISCHE PATENTSCHRIFT

(11) **EP 2 920 029 B1**
(45) Veröffentlichungstag und Bekanntmachung des Hinweises auf die Patenterteilung: **12.07.2017**
(21) Anmeldenummer: 13779826.0
(22) Anmeldetag: 21.10.2013
(51) Int. Cl.: B60R 13/08, G10K 11/168

(54) **SCHUTZSCHILD ZUR THERMISCHEN UND AKUSTISCHEN ABSCHIRMUNG**
THERMIC AND ACOUSTIC PROTECTION SHIELD
ÉCRAN DE PROTECTION DESTINÉ À LA PROTECTION THERMIQUE ET ACOUSTIQUE

(30) Priorität: 14.11.2012 DE 102012220769
(43) Veröffentlichungstag der Anmeldung: 23.09.2015
(73) Patentinhaber: Federal-Mogul Sealing Systems GmbH, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2013/071944
(87) Internationale Veröffentlichungsnummer: WO 2014/075871

(56) Entgegenhaltungen:
- EP-A1- 2 302 620
- EP-A2- 0 454 949
- DE-A1- 19 910 595
- DE-A1- 19 952 689
- DE-A1-102006 055 336
- JP-A- H10 282 965

## Beschreibung

Die vorliegende Erfindung betrifft eine Wärme- und Schallabschirmungsvorrichtung, insbesondere für Abgas führende Bauteile von Vorbrennungsmotoren, wie zum Beispiel Turbolader, Katalysatoren, Abgaskrümmer.

Einige Bauteile in Kraftfahrzeugen und vergleichbaren Maschinen, wie zum Beispiel Bauteile in Auspuffanlagen wie Katalysatoren, Auspuffkrümmer, Turbolader und dergleichen, können im Betrieb sehr heiß werden. Diese hohen Temperaturen können andere Bauteile, wie beispielsweise Kunststoffschläuche, elektrische Leitungen, elektronische Bauteile von Steuergeräten etc. beeinträchtigen. Deshalb ist es unerlässlich, diese temperaturempfindlichen Bauteile durch thermische Abschirmung vor zu hohen Temperaturen zu schützen.

Eine weitere Anwendung einer thermischen Abschirmung kann jedoch auch darin bestehen, ein Bauteil eines Kraftfahrzeugs, z.B. einen Abgaskatalysator, durch thermische Abschirmung auf einer bestimmten Mindesttemperatur zu halten bzw. ein schnelleres Erreichen der Betriebstemperatur zu erhalten. Im Falle eines Abgaskatalysators ist etwa durch ein schnelleres Erreichen einer Mindesttemperatur eine einwandfreiere und effektivere Funktion des Katalysators möglich, wodurch die Abgaswerte des entsprechenden Fahrzeugs verbessert werden können.

Um eine thermische Abschirmung zu erzielen, bestehen verschiedene Möglichkeiten. Durch Verwendung von Wärme dämmenden Materialien in einem Schutzschild, wie zum Beispiel schaumartigen Materialien oder Faserwerkstoffen, die wegen ihres vergleichsweise hohen Gehalts an Luft die Wärme schlecht leiten, kann einen thermische Abschirmung gewährleistet werden. Eine weitere oder zusätzliche Möglichkeit besteht darin, die Wärmestrahlung von heißen Bauteilen an der Abschirmung zu reflektieren, was etwa durch metallische Beschichtungen erreicht werden kann. Eine solche reflektierende Abschirmung kann am einfachsten mit einem massiven Blech erreicht werden. Bei diesen luft- und somit schallundurchlässigen Blechen wird jedoch der Schall im Wesentlichen vollständig reflektiert, was im ungünstigsten Fall Resonanzen hervorrufen kann, die zu Dröhnen oder ähnlichen unerwünschten akustischen Effekten führen können.

Eine weitere Anforderung für Abschirmungen besteht darin, den immer strenger werdenden Vorschriften hinsichtlich des Außenschallpegels von Fahrzeugen zu genügen, sind zusätzlich akustische Abschirmungen in Fahrzeugen notwendig. Um den durch auftretende Schwingungen entstehenden Schall wirkungsvoll abzuschirmen, sollten solche Abschirmungen die Geräusche möglichst absorbieren, d. h. nicht einfach reflektieren. Eine solche akustische Abschirmung kann durch spezielle Schall schluckende Oberflächenstrukturen erhalten werden. Dies ist aber in der Regel schwierig herzustellen und/oder benötigt gewisse Mindestdicken der entsprechenden Lagen, was bei den teilweise beengten Verhältnissen in modernen Fahrzeugen nachteilig ist.

Eine weitere Möglichkeit zur akustischen Abschirmung besteht darin, ein Material mit durchlässigen Poren zu verwenden. Innerhalb dieser Poren kann die mechanische Energie von Schallwellen durch Reibung in Wärme umgesetzt werden, wodurch eine akustische Abschirmung erhalten wird. Durch den Gehalt an Luft in den Poren wird überdies auch eine thermische Isolation erreicht.

Da gerade die Wärme erzeugenden Bauteile in Fahrzeugen oft auch einen hohen Geräuschpegel verursachen, ist es vorteilhaft, Abschirmungen bereitzustellen, die sowohl gute thermische, als auch gute akustische Abschirmeigenschaften aufweisen.

Der bekannte Stand der Technik umfasst unter anderem einen mehrlagigen Materialaufbau, bei dem die innere (der Schall-/Wärmequelle zugewandte) Lage eine Perforierung aufweist. Die mittlere Lage kann ein Weichstoff-Absorbermaterial sein, und die äußere Lage kann eine strukturierte oder glatte Metallplatte sein.

Aus DE 19952689 A1, die den Oberbegriff des Anspruchs 1 bildet, ist eine Schalldämmwand bekannt, die eine profilierte Lochwand und eine Rückwand aufweist, wobei die Lochwand mit der Rückwand über Klebepunkte verbunden ist.

In DE 102006055336 A1 ist ein Schutzschild zur thermischen und akustischen Abschirmung offenbart, bei dem eine glatte Außenlage und eine genoppte Innenlage durch Umbördeln im Randbereich zusammengehalten werden und beide Lagen mit Perforierungen ausgeführt sind.

EP 0454949 A2 beschreibt eine Abschirmvorrichtung aus einer Absorberplatte und einer Reihe von Helmholtzresonatoren in einer zweiten Platte, die beide aus Polymer-Formteilen ausgebildet sind. Die Platten werden beispielsweise miteinander verklebt oder verschweißt.

Gemäß einem ersten Aspekt wird ein Schutzschild zur thermischen und akustischen Abschirmung eines Bauteils bereitgestellt, umfassend:
- eine erste metallische Blechlage auf der dem Bauteil zugewandten Seite des Schutzschilds; und
- eine zweite metallische Blechlage auf der dem Bauteil abgewandten Seite des Schutzschilds;
- wobei die erste Blechlage dem Bauteil zugewandte erhabene Hohl-Noppen aufweist; und
- wobei jede Hohl-Noppe ein Kammervolumen definiert und eine Öffnung auf der dem Bauteil zugewandten Seite aufweist.

Ein erfindungsgemäßer Schutzschild umfasst mindestens zwei metallische Blechlagen. Die der Schall-/Wärme-Quelle zugewandte Lage ist mit einer Noppenstruktur versehen. Bei den Noppen handelt es sich um etwa durch Prägen gebildete Vertiefungen, die in Richtung auf das abzuschirmende Bauteil zu erhaben bzw. vertieft sind. Auf der erhabenen Fläche jeder Noppe befindet sich eine Öffnung, etwa eine Bohrung. Die zweite Lage ist in Bezug auf die erste Lage so angeordnet, dass sie die Kammern schließt, die sich durch die Noppenform bilden. Die Noppen sind somit hohl und definieren zwischen erster und zweiter Blechlage ein jeweiliges Kammervolumen. Die zweite Blechlage verschließt die Hohl-Noppen auf der dem Bauteil abgewandten Seite luftdicht.

Um eine optimale Schall absorbierende Funktion zu gewährleisten, sind die Kammern durch die zweite Lage luftdicht verschlossen. Hierzu umfasst der Schutzschild weiter eine dichtende Schicht zwischen der ersten und der zweiten Blechlage, wobei die dichtende Schicht eine separate dritte Lage oder eine Beschichtung auf der ersten und/oder zweiten Blechlage ist.

Vorzugsweise ist die dichtende Schicht gebildet, indem die zweite Blechlage auf der der ersten Blechlage zugewandten Seite mit einer entsprechenden Beschichtung versehen ist.

Aus Kosten- und Handling-Gründen ist diese Ausführungsform bevorzugt. Die Beschichtung kann beispielsweise Federal Mogul High Temperature Coating (HTC) sein.

Alternativ kann aber auch eine separate dritte Dichtungslage zwischen den beiden Blechlagen angeordnet werden. In jedem Fall muss die dichtende Schicht eine dem jeweiligen Anwendungsfall angepasste Temperaturbeständigkeit besitzen.

Gemäß einer Ausführungsform sind die erste und die zweite Blechlage durch Randverbördelung, Durchsetzfügen, Nieten oder Punktschweißen verbunden. Hiermit wird es möglich, ohne Verkleben der Lagen auszukommen. Ein Verkleben ist aufwendig im Prozess, da der Kleber nur partiell zwischen den Noppen aufgetragen würde. Hierdurch wäre keine Abdichtung rundum am Umfang der Noppen erzielbar.

Gemäß einer Ausführungsform weisen die Öffnungen in den Hohl-Noppen mindestens zwei verschiedene Größen auf, mit einem jeweiligen Durchmesser zwischen 0,15 mm bis 8 mm, bevorzugt zwischen 0,3 und 4 mm.

In Abhängigkeit von dem Kammervolumen und der Blechdicke werden die Durchmesser der Öffnungen in den Noppen entsprechend dem benötigten Schallabsorptionsgrad breitbandig bezüglich des abzuschirmenden bzw. zu absorbierenden Frequenzbands ausgelegt. Hierzu ist es vorteilhaft, mindestens zwei unterschiedliche, bevorzugt einen Bereich verschiedener Bohrungsdurchmesser innerhalb der genoppten Lage vorzusehen.

Auch die Anzahl und Position der unterschiedlich großen Öffnungen in dem Schutzschild werden je nach Anforderung festgelegt und lassen eine optimale Einstellung des Schutzschilds für den gegebenen Anwendungsfall zu. Insbesondere können die Eigenschaften des Schutzschilds so auch lokal unterschiedlich ausgestaltet werden, etwa um besonders heiße und/oder laute Stellen bzw. "hot spots" des abzuschirmenden Bauteils verstärkt abzuschirmen.

Durch Nutzung unterschiedlicher Lochdurchmesser kann eine breitbandige Schallabsorption, etwa über einen Frequenzbereich von 0,5 kHz bis 8 kHz erreicht werden. Bevorzugt unterschreiten die Lochdurchmesser 0,8 mm nicht, da dies dazu führen kann, dass nur eine schmalbandige Wirksamkeit im unteren Frequenzbereich erhalten wird.

Gemäß einer Ausführungsform weist die erste Blechlage eine Dicke von 0,1 mm bis 1,4 mm, bevorzugt 0,1 bis 0,7 mm auf.

Gemäß einer Ausführungsform ist die erste und/oder die zweite Blechlage eine Lage aus Edelstahl, beschichtetem oder unbeschichteten Stahl order Aluminium.

Gemäß einer Ausführungsform beträgt das Kammervolumen 200-250 mm³, bevorzugt etwa 224 mm³.

Eine Beispielkonfiguration entsprechend Kammervolumen 224 mm³, Blechdicke 0,3 mm und Lochdurchmesser 0,3 bis 4 mm ergibt im Zusammenspiel ein Breitbandsystem mit angestrebten Absorptionswerten. Wird eine Größe verändert, müssen die beiden anderen Größen neu angepasst werden.

Gemäß einer Ausführungsform ist die Dicke der zweiten Blechlage größer als die Dicke der ersten Blechlage.

Die somit unterschiedlich schwingenden Massen der Einzellagen können das Dämpfungsverhalten des Bauteils verbessern.

Gemäß einer Ausführungsform beträgt die Länge und Breite der Noppen etwa 8 mm und die Höhe etwa 3,5 mm.

Kurze Beschreibung der Figuren
- Fig. 1: zeigt eine Ausführungsform des Schutzschilds der Erfindung im Querschnitt; und
- Fig. 2: zeigt einen Abschnitt einer Ausführungsform des Schutzschilds der Erfindung in dreidimensionaler Draufsicht.

### Detaillierte Beschreibung

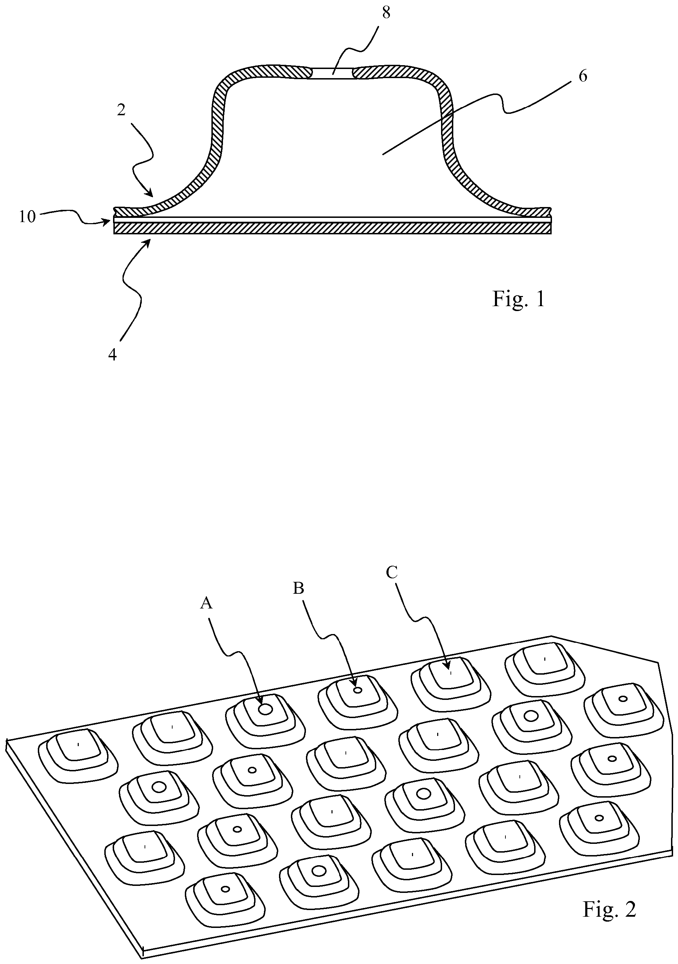

In Figur 1 ist ein Querschnitt durch eine Ausführungsform eines erfindungsgemäßen Schutzschilds gezeigt. Eine erste Blechlage 2 weist mehrere Noppen auf, von denen in dieser Figur lediglich eine gezeigt ist. Die Noppen können etwa durch Hohlprägen in die Blechlage 2 eingebracht werden. Die Blechlage 2 befindet sich auf der Seite des Schutzschilds, die im montierten Zustand dem abzuschirmenden Bauteil zugewandt ist.

Die Noppen definieren einen kammerartigen Hohlraum 6 mit einem vorgebbaren Volumen. Sie weisen an ihrer dem abzuschirmenden Bauteil zugewandten Seite bzw. in dem gegenüber der restlichen Blechlage 2 erhabenen Bereich eine Öffnung 8 auf. Diese ist vorzugsweise mittig in der Noppe angeordnet, andere Positionen sind aber ebenfalls möglich. Die Größe der Öffnung kann variabel gestaltet werden, insbesondere kann die Größe der Öffnung in den Noppen ortsabhängig variieren. Die Öffnung 8 kann bevorzugt kreisrund, etwa als Bohrung ausgeführt sein, andere Geometrien sind aber ebenfalls möglich.

Eine zweite Blechlage 4 befindet sich auf der Seite des Schutzschilds, die im montierten Zustand dem abzuschirmenden Bauteil abgewandt ist. Die zweite Blechlage 4 verschließt den Kammerhohlraum 6 auf der dem Bauteil abgewandten Seite. Mit anderen Worten, zwischen zweiter Blechlage 4 und dem erhabenen Bereich der Noppe in der ersten Blechlage 2 (unter Vernachlässigung der Öffnung 8) wird ein vorgebbares Kammervolumen definiert. Der Hohlraum der Noppe ist durch die Öffnung 8 zum Bauteil hin offen, um die gewünschte Schall- und/oder Wärmeabsorption zu erzielen.

Zwischen der ersten Blechlage 2 und der zweiten Blechlage 4 ist eine Beschichtung bzw. Dichtlage 10 angeordnet. Diese kann durch eine auf die zweite Blechlage 4 aufgebrachte Beschichtung implementiert werden. Alternativ kann auch die erste Blechlage 2 sein, können beide Blechlagen beschichtet sein oder eine separate Dichtlage 10 zum Einsatz kommen. Die Dichtlage 10 ist entsprechend der Wärmeabgabe des abzuschirmenden Bauteils temperaturbeständig ausgelegt. Die Dichtlage 10 dient dazu, den Hohlraum der Noppen an deren Umfang luftdicht abzudichten. Mit anderen Worten, der einzige Eintrittspunkt für Schallwellen ist dadurch die Öffnung 8, wohingegen ein Austritt von Schallwellen zwischen die erste und zweite Blechlage verhindert wird.

Eine Anpassung der Schallabsorption ist durch den erfindungsgemäßen Schutzschild sehr flexibel möglich. Als Variationsparameter stehen dazu das Kammervolumen der Noppen, die Anzahl/ Dichte der Noppen, die Dicken von erster und zweiter Blechlage (und gegebenenfalls der Dichtlage) und die Größe der Öffnung in den Noppen zur Verfügung.

Eine mögliche Anordnung ist in der Figur 2 gezeigt. Die Noppen sind hierbei im Wesentlichen gleichmäßig verteilt angeordnet. Es ist aber ebenso möglich, die Dichte von Noppen lokal unterschiedlich auszugestalten. Die Größe der Öffnungen in den Noppen variiert, in der Figur 2 sind beispielhaft drei verschiedene Größen A, B und C (oberste Reihe der Noppen) dargestellt.

In einem Beispiel einer Auslegung eines solchen Schutzschilds ist die erste Blechlage bzw. Innenlage 0,3 mm dick, die zweite Blechlage bzw. Außenlage ist 0,7 mm dick, das Kammervolumen der Noppen beträgt ca. 224 mm³, die Noppen sind ungefähr 8 mm breit und lang sowie 3,5 mm hoch. In der Figur 2 sind annähernd quadratische Noppen gezeigt. Erfindungsgemäß sind aber auch andere Formen möglich, etwa rund, oval, rechteckig oder allgemein mehreckig.

Der Einfachheit halber ist in der Figur 2 ein ebener Abschnitt eines erfindungsgemäßen Schutzschilds gezeigt. Zur Abschirmung dreidimensionaler Bauteile kann ein entsprechend dreidimensionaler Schutzschild mit der erfindungsgemäßen Struktur bereitgestellt werden. Dabei befindet sich die erste Blechlage auf der dem Bauteil bzw. der Wärme-/Schallquelle zugewandten Seite, oder bildet mit anderen Worten die Innenlage eines 3D-Schutzschilds. Die zweite Blechlage befindet sich auf der dem Bauteil abgewandten Seite, oder bildet mit anderen Worten die Außenlage des 3D-Schutzschilds.

## Patentansprüche

1. Schutzschild zur thermischen und akustischen Abschirmung eines Bauteils, umfassend:
- eine erste metallische Blechlage (2) auf der dem Bauteil zugewandten Seite des Schutzschilds; und
- eine zweite metallische Blechlage (4) auf der dem Bauteil abgewandten Seite des Schutzschilds;
- wobei die erste Blechlage (2) dem Bauteil zugewandte erhabene Hohl-Noppen (6) aufweist;
- wobei jede Hohl-Noppe (6) ein Kammervolumen definiert und eine Öffnung (8) auf der dem Bauteil zugewandten Seite aufweist;
- wobei die zweite Blechlage (4) die Hohl-Noppen (6) auf der dem Bauteil abgewandten Seite luftdicht verschließt, **gekennzeichnet durch**
- eine dichtende Schicht (10) zwischen der ersten Blechlage (2) und der zweiten Blechlage (4), wobei die dichtende Schicht (10) eine separate dritte Lage oder eine Beschichtung auf der ersten Blechlage (2) und/oder zweiten Blechlage (4) ist.

2. Schutzschild nach Anspruch 1, wobei die erste Blechlage (2) und die zweite Blechlage (4) durch Randverbördelung, Durchsetzfügen, Nieten oder Punktschweißen verbunden sind.

3. Schutzschild nach einem der vorstehenden Ansprüche, wobei die Öffnungen (8) in den Hohl-Noppen (6) mindestens zwei verschiedene Größen aufweisen, mit einem jeweiligen Durchmesser zwischen 0,15 mm bis 8 mm, bevorzugt zwischen 0,3 und 4 mm.

4. Schutzschild nach einem der vorstehenden Ansprüche, wobei die erste Blechlage (2) eine Dicke von 0,1 mm bis 1,4 mm, bevorzugt 0,1 bis 0,7 mm aufweist.

5. Schutzschild nach einem der vorstehenden Ansprüche, wobei die erste Blechlage (2) und/oder die zweite Blechlage (4) eine Lage aus Edelstahl, beschichtetem oder unbeschichteten Stahl oder Aluminium ist.

6. Schutzschild nach einem der vorstehenden Ansprüche, wobei das Kammervolumen etwa 200 bis 250 mm³, bevorzugt etwa 224 mm³ beträgt.

7. Schutzschild nach einem der vorstehenden Ansprüche, wobei die Dicke der zweiten Blechlage (4) größer ist als die Dicke der ersten Blechlage (2).

8. Schutzschild nach einem der vorstehenden Ansprüche, wobei die Länge und Breite der Hohl-Noppen (6) etwa 8 mm und die Höhe etwa 3,5 mm beträgt.

## Claims

1. A protective shield for thermally and acoustically shielding a component, comprising:
- a first metallic sheet layer (2) on the side of the protective shield facing the component; and
- a second metallic sheet layer (4) on the side of the protective shield facing away from the component;
- the first sheet layer (2) having raised hollow studs (6) directed towards the component;
- each hollow stud (6) defining a chamber volume and having an opening (8) on the side facing the component;
- the second sheet layer (4) closing the hollow studs (6) in an air-tight manner on the side facing away from the component,
**characterised by**
- a sealing layer (10) between the first sheet layer (2) and the second sheet layer (4), wherein the sealing layer (10) is a separate third layer or a coating on the first sheet layer (2) and/or second sheet layer (4).

2. The protective shield according to claim 1, wherein the first sheet layer (2) and the second sheet layer (4) are connected by edge-crimping, clinching, riveting or spot-welding.

3. The protective shield according to any one of the preceding claims, wherein the openings (8) in the hollow studs (6) have at least two different sizes, with a respective diameter between 0.15 mm and 8 mm, preferably between 0.3 mm and 4 mm.

4. The protective shield according to any one of the preceding claims, wherein the first sheet layer (2) has a thickness of 0.1 mm to 1.4 mm, preferably 0.1 to 0.7 mm.

5. The protective shield according to any one of the preceding claims, wherein the first sheet layer (2) and/or the second sheet layer (4) is a layer of stainless steel, coated or uncoated steel or aluminium.

6. The protective shield according to any one of the preceding claims, wherein the chamber volume is approximately 200 to 250 mm³, preferably approximately 224 mm³.

7. The protective shield according to any one of the preceding claims, wherein the thickness of the second sheet layer (4) is greater than the thickness of the first sheet layer (2).

8. The protective shield according to any one of the preceding claims, wherein the length and width of the hollow studs (6) is approximately 8 mm and the height is approximately 3.5 mm.

## Revendications

1. Écran protecteur destiné à l'isolation thermique et acoustique d'un élément de construction, comprenant
- une première couche en tôle (2) métallique, sur le côté de l'écran protecteur qui fait face à l'élément de construction ; et
- une deuxième couche en tôle (4) métallique, sur le côté de l'écran protecteur qui est opposé à l'élément de construction ;
- la première couche en tôle (2) comportant des boutons creux (6) surélevés, faisant face à l'élément de construction ;
- chaque bouton creux (6) définissant un volume compartimenté et comportant un orifice (8) sur le côté qui fait face à l'élément de construction ;
- la deuxième couche de tôle (4) fermant les boutons creux (6) de manière étanche à l'air sur le côté qui est opposé à l'élément de construction,
**caractérisé par**
- une couche (10) d'étanchéité entre la première couche de tôle (2) et la deuxième couche de tôle (4), la couche d'étanchéité (10) étant une troisième couche séparée ou un revêtement sur la première couche de tôle (2) et/ou la deuxième couche de tôle (4).

2. Écran protecteur selon la revendication 1, la première couche de tôle (2) et la deuxième couche de tôle (4) étant reliées par bords rabattus, par clinchage, par rivetage ou par soudage par points.

3. Écran protecteur selon l'une quelconque des revendications précédentes, les orifices (8) dans les boutons creux (6) présentant au moins deux tailles différentes, avec un diamètre respectif compris entre 0,15 mm et 8 mm, de préférence entre 0,3 et 4 mm.

4. Écran protecteur selon l'une quelconque des revendications précédentes, la première couche de tôle (2) présentant une épaisseur de 0,1 mm à 1,4 mm, de préférence de 0,1 à 0,7 mm.

5. Écran protecteur selon l'une quelconque des revendications précédentes, la première couche de tôle (2) et/ou la deuxième couche de tôle (4) étant une couche en acier inoxydable, en acier revêtu ou non revêtu ou en aluminium.

6. Écran protecteur selon l'une quelconque des revendications précédentes, le volume compartimenté étant d'environ 200 à 250 mm³, de préférence d'environ 224 mm³.

7. Écran protecteur selon l'une quelconque des revendications précédentes, l'épaisseur de la deuxième couche de tôle (4) étant supérieure à l'épaisseur de la première couche de tôle (2).

8. Écran protecteur selon l'une quelconque des revendications précédentes, la longueur et la largeur des boutons creux (6) étant d'environ 8 mm et leur hauteur étant d'environ 3,5 mm.
